# FASCICULE DE BREVET EUROPEEN

(11) **EP 1 337 392 B1**
(45) Date de publication et mention de la délivrance du brevet: **04.10.2006**
(21) Numéro de dépôt: 01998439.2
(22) Date de dépôt: 23.11.2001
(51) Int. Cl.: B29C 61/08, B65D 41/62

(54) **PROCEDE DE FABRICATION DE CAPSULES A JUPE THERMORETRACTABLE**
VERFAHREN ZUR HERSTELLUNG VON WÄRMESCHRUMPFBAREN SCHÜRZENKAPPEN
METHOD FOR MAKING HEAT-SHRINKABLE SKIRT CAPS

(30) Priorité: 28.11.2000 FR 0015344
(43) Date de publication de la demande: 27.08.2003
(73) Titulaire: Alcan Packaging Capsules, 75218 Paris cedex 16 (FR)
(72) Inventeur: GRANGER, Jacques, 33350 Sainte Terre (FR)
(74) Mandataire: Pigasse, Daniel
(86) Numéro de dépôt international: PCT/FR2001/003700
(87) Numéro de publication internationale: WO 2002/043945

(56) Documents cités:
- DE-A- 4 337 116
- FR-A- 1 372 805
- FR-A- 1 424 730
- FR-A- 1 424 731
- FR-A- 1 441 623
- FR-A- 2 201 957
- FR-A- 2 429 159

## Description

### DOMAINE DE L'INVENTION

L'invention concerne le domaine des capsules de bouchage de récipients ou de bouteilles ou de sur-bouchage de récipients ou de bouteilles préalablement fermées par un bouchon, un opercule ou tout autre moyen de bouchage.
Plus particulièrement, l'invention concerne le domaine des capsules à jupe thermorétractable, c'est-à-dire des capsules formées d'une matière thermoplastique qui, durant le capsulage, sont rétreintes sur le goulot par apport d'énergie thermique, par opposition aux capsules de sur-bouchage métalliques dont la jupe est appliquée et déformée contre la bague de verrerie du goulot pour être sertie durant le capsulage.
Plus spécifiquement, l'invention concerne un nouveau procédé de fabrication de capsules à jupe thermorétractable, capsules de sur-bouchage, et éventuellement capsules de bouchage, à jupe thermorétractable.

### ETAT DE LA TECHNIQUE

On connaît depuis longtemps des capsules thermorétractables (TR en abrégé).
Ainsi, le brevet FR 805.771 décrit la fabrication d'une capsule à base de PVC formée par extrusion d'un tube à base de PVC, puis, après allongement éventuel, expansion du tube en sortie d'extrudeuse; refroidissement et tronçonnage en portions de tubes cylindriques formant en quelque sorte une capsule dépourvue de tête.

Le brevet GB 1,015,713 décrit aussi un procédé de fabrication de capsules TR dans lequel un tube, en matériau à base de PVC ou de PS et rendu thermorétractable par expansion, est aplati et thermoscellée transversalement à une extrémité de manière à l'obturer, et tronçonné, de manière à former une capsule aplatie, qui, après écartement, forme une capsule à tête soudée qui peut être placée et thermorétractée sur un goulot de bouteille.

Le brevet FR 2.115.137 décrit aussi un procédé de fabrication de capsules TR dans lequel on forme un flan découpé dans une feuille plastique thermorétractable, et on forme une capsule TR roulée en soudant les bords latéraux par recouvrement sensiblement axial. Une tête de capsule peut également être collée. Cette capsule peut être combinée avec un bouchon de bouteille.

Le brevet FR 2.219.080 décrit aussi une capsule TR formée par une partie tubulaire en PVC ou en PS dont une extrémité fermée, destinée à former la tête de la capsule, est obtenue par tassement et compression d'une portion de longueur de ladite partie tubulaire.

Le brevet US 5,118,460 décrit un procédé de fabrication de capsules TR par moulage.
De même, le brevet FR 2 708 513 décrit un procédé de fabrication de capsules TR dans lequel on forme d'abord par moulage une préforme, que l'on expanse ensuite.

Le brevet FR 1.424.731 décrit un procédé de fabrication de capsules ou coiffes à jupe thermorétractable, selon lequel on découpe des tronçons dans un tube thermoplastique extrudé et préalablement rendu rétrécissable par la chaleur de la manière décrite dans le brevet FR 1.424.730, auquel le précédent brevet fait référence, à savoir en soumettant le tube, en sortie d'extrudeuse, à une expansion radiale à chaud suivie d'un refroidissement jusqu'à température ambiante.

Le brevet FR 1.441.623 décrit la fabrication de gaines thermorétractables en matière plastique selon lequel on soumet un tube extrudé en matière thermoplastique à un traitement d'irradiation de manière à former un tube réticulé, ledit tube réticulé étant ensuite chauffé et soumis à une expansion monoaxiale radiale obtenue en maintenant sous pression l'intérieur dudit tube.

### PROBLEMES POSES

Les capsules ou coiffes à jupe thermorétractable - ou capsules TR en abrégé - connues, principalement des capsules de sur-bouchage, présentent au moins un des inconvénients suivants relatifs à une esthétique insuffisante et/ou à un coût de production trop élevé :
- d'une part, en ce qui concerne l'aspect esthétique des capsules, les exigences actuelles ne peuvent accepter qu'une capsule de sur-bouchage soit dépourvue de tête, soit formée d'une tête qui ne serait pas parfaitement plane.
   De même, en ce qui concerne la jupe de la capsule, les capsules de sur-bouchage TR à jupe roulée font figure de capsule de bas de gamme, compte tenu de l'aspect peu esthétique de la soudure latérale de la jupe roulée.
- d'autre part, en ce qui concerne le coût de production des capsules TR, les capsules les plus économiques sont les capsules roulées formées à partir d'un matériau en bande dans lequel des flans sont découpés. Les capsules les moins économiques sont, outre les capsules métalliques traditionnelles, les capsules moulées.

Le problème posé par l'invention est donc d'obtenir un procédé conduisant à une capsule - terme incluant les capsules de bouchage, les capsules de sur-bouchage et les coiffes de sur-bouchage pour vins effervescents - qui présente simultanément les caractéristiques et qualité suivantes :
- qualités d'ordre esthétique, avec une jupe non-roulée et une tête plate, de manière à pouvoir venir concurrencer les capsules «haut de gamme » du commerce, typiquement les capsules métalliques,
- qualités d'ordre économique, avec un coût de production sensiblement voisin de celui des capsules de sur-bouchage TR à jupe roulée.
En outre, l'invention vise à fournir un procédé de grande flexibilité permettant d'offrir une grande variété de capsules, compte tenu de la personnalisation croissante des besoins des clients.

### DESCRIPTION DE L'INVENTION

Dans le procédé de fabrication de capsules ou coiffes à jupe thermorétractable selon l'invention :
a) on forme par extrusion un tube extrudé en matière thermoplastique, typiquement choisie parmi des polyoléfines, présentant, en sortie d'extrudeuse, un diamètre D₁,
b) puis, ledit tube extrudé de diamètre D1 est soumis à un traitement d'irradiation, de manière à réticuler ladite matière thermoplastique,
c) ledit tube réticulé, après avoir été porté à une température au moins égale à une température sensiblement égale à la température de fusion de sa phase cristalline, est soumis, au défilé, à une expansion monoaxiale radiale pour former un tube expansé de diamètre D2, ladite expansion monoaxiale radiale étant obtenue en maintenant sous dépression l'extérieur dudit tube réticulé, puis est refroidi jusqu'à la température, typiquement la température ambiante, à laquelle il peut être tronçonné,
d) ledit tube expansé est ensuite tronçonné, portions de tube, de longueur sensiblement égale à la hauteur desdites capsules ou coiffes, et
e) une tête est ensuite assemblée à ou formée sur ladite portion de tube,
de manière à obtenir une capsule ou une coiffe, à jupe thermorétractable, économique et présentant une jupe homogène exempte de ligne de raccordement axial.

Ce procédé, qui se distingue sur de très nombreux points de l'état de la technique, permet de résoudre l'ensemble des problèmes posés.
En effet, d'une part, il permet d'utiliser comme matière première, les matières les plus économiques qui soient, à savoir les polyoléfines.
Par ailleurs, ce procédé est particulièrement économique dans la mesure où, outre le faible coût matière déjà évoqué, il met en jeu et rassemble deux technologies peu onéreuses, car relativement productives, à savoir l'extrusion de tube et l'assemblage d'une tête sur une portion de tube.
Il permet d'autre part de fabriquer des capsules ou coiffes à jupe parfaitement homogène exempte de ligne de raccordement axial, et donc d'aspect attrayant.
En outre, le procédé selon l'invention ouvre la voie à une vaste famille de capsules, notamment par le choix des matières pouvant constituer la jupe et la tête, la jupe pouvant être en matière plastique colorée ou non, éventuellement transparente, ou encore dotée d'effets optiques particuliers, tels que des reflets nacrés, la tête pouvant par ailleurs être en métal ou complexe multicouche, ou également en matière plastique comme la jupe, l'aspect de la tête pouvant être éventuellement différent de celui de la jupe.
Par extrusion, on entend aussi la coextrusion de différentes couches concentriques de différentes matières thermoplastiques ou d'une même matière mais avec des charges (charge blanches, colorées ou en vue d'effets spéciaux) différentes selon les couches, de manière également à pouvoir fabriquer une grande variété de capsules par leur aspect, et cela à partir d'un même procédé.

### DESCRIPTION DES FIGURES

Les figures 1 à 4 sont toutes relatives à l'invention alors que la figure 5 correspond à l'état de la technique.
Toutes les figures sont des descriptions schématiques des différentes étapes des procédés décrits.
La figure 1 décrit le procédé de fabrication de la jupe de la capsule selon l'invention, procédé commun à toutes les modalités de l'invention, notamment celles des figures 2 et 3. Elle décrit aussi une première modalité de fabrication et d'assemblage de la tête de la capsule.

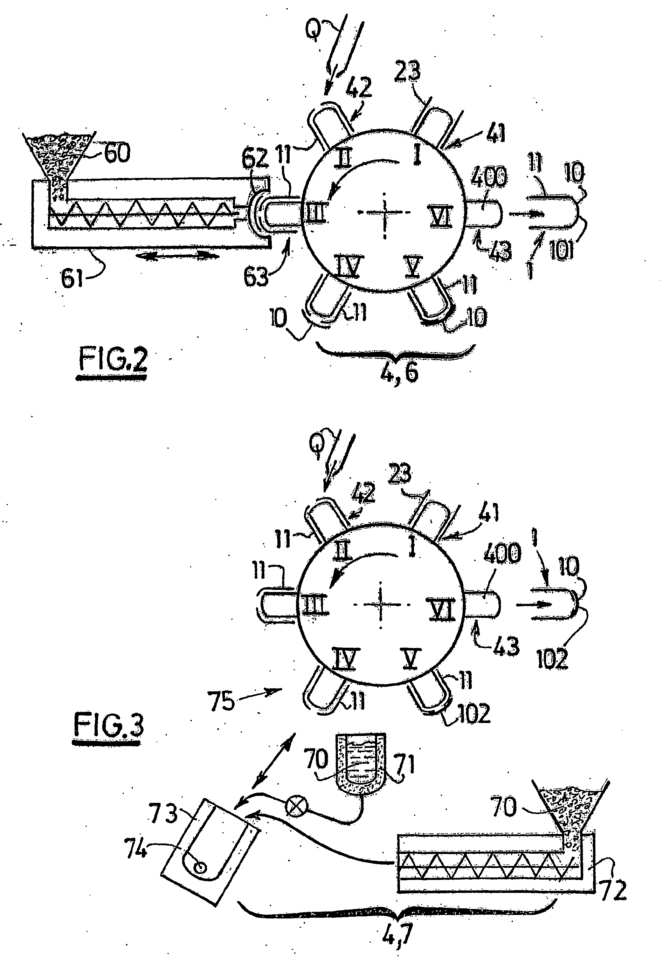

La figure 2 décrit une seconde modalité de fabrication, par injection, de la tête de la capsule.
La figure 3 décrit une troisième modalité de fabrication, par moulage, de la tête de la capsule.

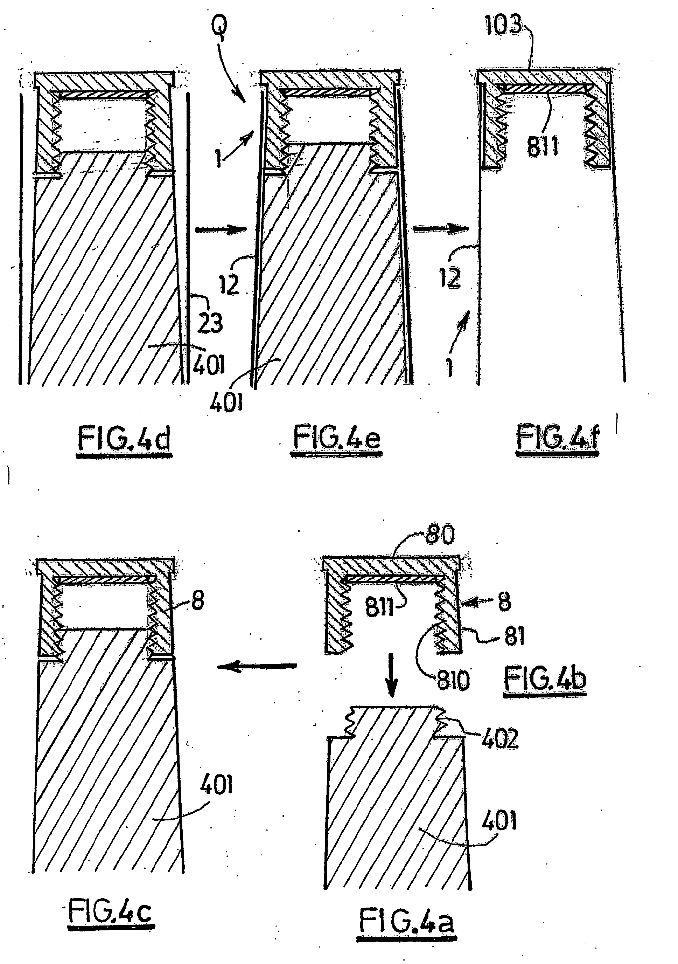

Les figures 4a à 4f décrivent une quatrième modalité de fabrication par fixation d'une jupe (12) sur un insert à jupe filetée (8), la jupe (12) étant formée à partir de la portion de tube (23).
Les figures 4a à 4c représentent l'assemblage temporaire de l'insert (8) sur l'extrémité du mandrin (401) à extrémité (402) adapté pour cet assemblage temporaire, le mandrin (401) et l'insert (8) étant représentés séparés sur les figures 4a et 4b, et assemblés sur la figure 4c.
Les figures 4d à 4f illustrent la formation de la capsule (1), la figure 4d illustrant le positionnement de la portion de tube (23) sur l'ensemble constitué par le mandrin (401) et l'insert (8), ensemble sur lequel la portion de tune (23) se rétracte comme illustré sur la figure 4e, avant séparation finale du mandrin (401) pour conduire à la capsule finale (1) comme illustré sur le figure 4f.

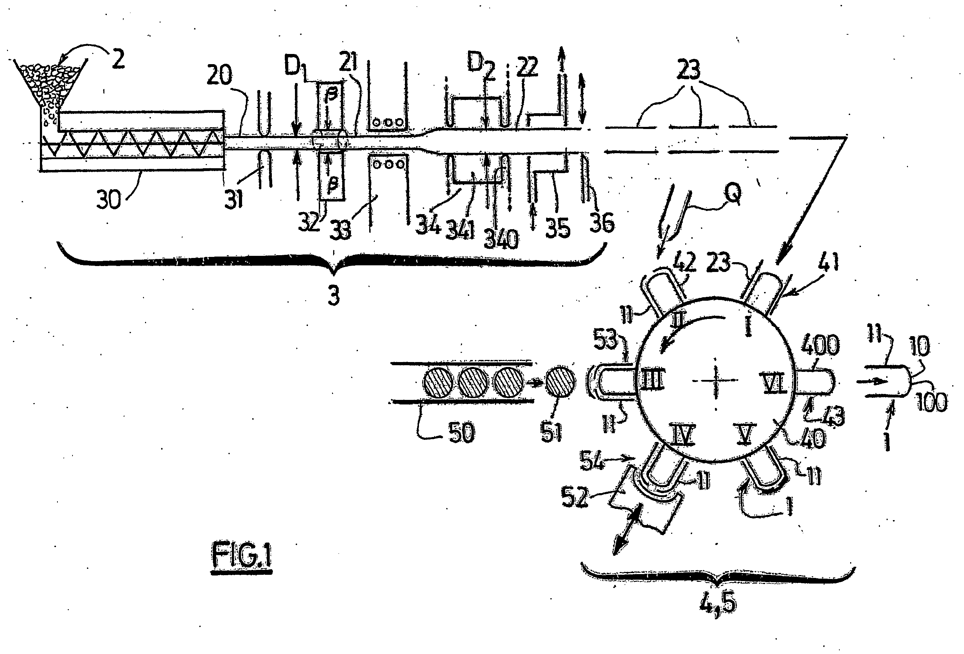

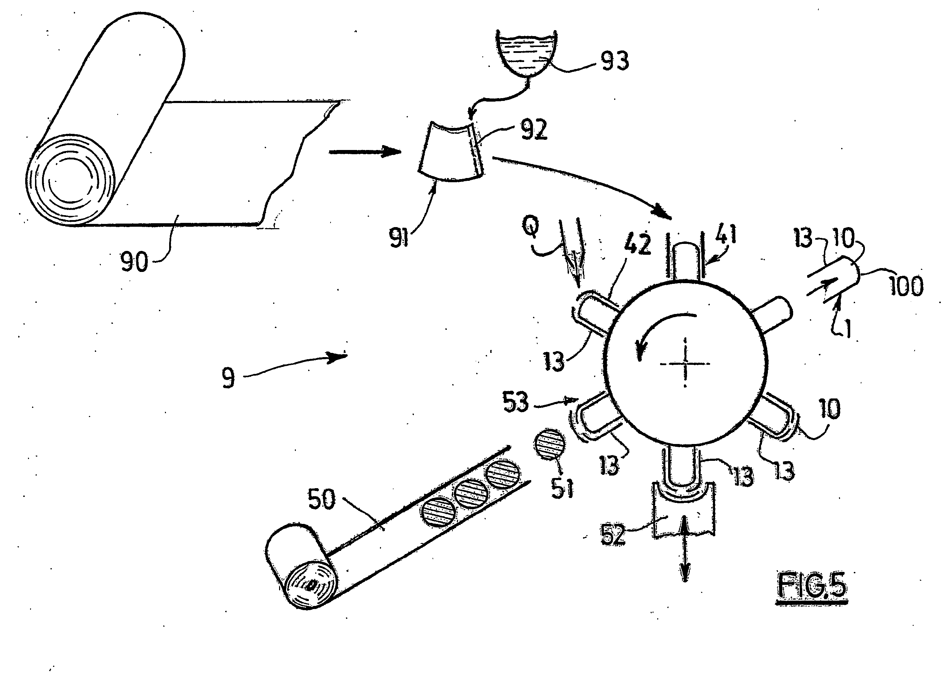

La figure 5 décrit le procédé de l'état de la technique qui comporte la formation d'une jupe roulée thermorétractable et un assemblage de la tête analogue à la première modalité de fabrication de la tête représentée sur la figure 1.

### DESCRIPTION DETAILLEE DE L'INVENTION

Selon l'invention, et comme variante possible, ledit tube (20), en sortie d'extrudeuse et avant ledit traitement d'irradiation, peut être soumis à un refroidissement et à un calibrage, de manière à imposer audit tube extrudé (20) des caractéristiques géométriques prédéterminées.
Comme autre variante, à l'étape c) du procédé, ladite expansion monoaxiale peut avoir lieu, en totalité ou en partie, durant la phase où le tube est refroidi, ce qui permet de diminuer la longueur de la chaîne de production.

Selon l'invention, ladite matière plastique (2) peut comprendre une polyoléfine choisie parmi le PE, le PP, le PB, les copolymères d'éthylène et de propylène, ou un élastomère, ou un mélange de ces différents polymères, sous forme d'un matériau monocouche ou d'un matériau multicouche. En effet, il peut être avantageux de coextruder un tube en matière plastique à plusieurs couches concentriques. Mais ladite matière plastique peut être constituée par un matériau monocouche en polyoléfine, choisi parmi le PE ou le PP.
De préférence, ladite polyoléfine est le PE.
Ladite matière plastique (2), ou au moins une couche dans le cas d'un matériau plastique multicouche, peut contenir une charge micronisée typiquement choisie parmi le talc, le carbonate de calcium, le sulfate de baryum, l'oxyde de titane, les pigments organiques ou minéraux, ou tout autre charge connue pour conduire à des effets visuels particulier ou à un toucher particulier.

Ledit traitement d'irradiation peut être un rayonnement ionisant choisi parmi les rayonnements β ou γ, mais, de préférence, ledit traitement d'irradiation est un bombardement électronique ou rayonnement β, typiquement appliqué audit tube à l'aide d'un dispositif d'irradiation annulaire (32) entourant ledit tube expansé.

Compte tenu des dimensions finales des capsules, elles-mêmes fonction des dimensions des goulots de bouteille à capsuler, le tube extrudé (20) peut présenter un diamètre D₁ compris entre 10 mm et 30 mm, le rapport D₂/D₁ étant compris entre 1,5 et 4.

Selon l'invention, ladite expansion monoaxiale radiale est obtenue par un dispositif d'expansion (34) maintenant sous dépression l'extérieur dudit tube à expanser.
Cette expansion monoaxiale radiale est différente de l'expansion biaxiale, à la fois radiale et longitudinale. Grâce à cette expansion exclusivement monoaxiale, la capsule formée se rétracte, lors de son application et du capsulage, de manière parfaitement homogène autour du goulot et avec un bon tendu de la jupe, de sorte que l'aspect de la jupe de la capsule thermorétractée après capsulage est attractif et constitue un avantage important de l'invention.

Ledit tube réticulé peut être expansé et calibré, typiquement à l'aide d'au moins un anneau de calibrage (340), de manière à assurer dans un tube expansé (22) cylindrique de diamètre D₂, présentant moins de 5% de variation sur le diamètre D₂.
Il a été en effet trouvé avantageux d'obtenir des capsules (1) d'une grande régularité géométrique, en particulier de diamètre, de manière à ce que la capsule, une fois thermorétractée sur le goulot à capsuler, sa jupe (11) soit d'aspect parfaitement lisse et homogène.
Pour cela, on peut utiliser deux anneaux de calibrage (340), anneaux espacés délimitant un volume intérieur ou une cavité annulaire (341) mise sous vide relatif de manière à exercer une dépression sur la surface extérieure dudit tube à expanser.
La figure 1 illustre une modalité de fabrication de portions de tube (23) selon l'invention. La ligne (3) de fabrication des portions de tubes (23) représentée sur la figure 1 correspond à une modalité de l'invention.

Le plus souvent, après l'étape d) au cours de laquelle ledit tube expansé (22) est tronçonné en portions de tube (23), ladite portion de tube (23), typiquement cylindrique à l'issue de l'étape d), peut être transformée en une portion de tube tronconique, de manière à former un tronc de cône et à obtenir une capsule empilable, typiquement en plaçant ladite portion de tube sur un mandrin tronconique et en chauffant ladite portion.
II est avantageux que ladite portion de tube soit positionnée sur ledit mandrin de manière à recourber intérieurement l'extrémité du tronc de cône de plus petit diamètre, typiquement sur une hauteur allant de 1 à 5 mm, et ainsi à former la jupe (11) de la capsule (1) et à faciliter ensuite l'assemblage de ladite tête (10).
Ainsi, le même mandrin tronconique (400) peut servir d'abord à transformer une portion de tube cylindrique en portion tronconique formant ladite jupe (11), puis à assembler ladite tête (10).

Comme représenté sur la figure 2, cette tête (10) peut être une tête injectée (10,101) formée par injection d'une matière thermoplastique (60), typiquement la même que celle formant ledit tube, sur une extrémité de ladite portion de tube (23) ou sur l'extrémité de petit diamètre, éventuellement recourbée intérieurement, dudit tronc de cône formé à partir da ladite portion de tube (23).

On peut aussi former ladite tête (10,100) par collage ou thermoscellage d'une pastille (51), plane ou à rebord incurvé, sur une extrémité de ladite portion de tube (23) ou sur l'extrémité de petit diamètre, éventuellement recourbée intérieurement, dudit tronc de cône formé à partir da ladite portion de tube (23).
Cette pastille (51) peut être obtenue par découpe d'un matériau en feuille ou en bande (50), éventuellement transparent, en un matériau choisi parmi les matières plastiques, métalliques (aluminium, étain), le papier ou le carton ou des assemblages multicouches de ces matériaux. Cette modalité a été illustrée sur la figure 1.

On peut également former ladite tête (10,102) par moulage, comme illustré sur la figure 3.

Quelque soit le procédé retenu pour former ladite tête (10,100,101,102), on forme ladite tête (10,100,101,102,103), après avoir formé la jupe (11) en forme de tronc de cône, et présentant éventuellement son extrémité de petit diamètre recourbée intérieurement, en utilisant, comme support intérieur dudit tronc de cône, le mandrin (400) ayant servi à former ladite jupe (11) tronconique.

Selon une autre variante de l'invention, et comme illustré sur les figures 4a à 4f, un insert (8), formant une tête (80) et comprenant éventuellement une jupe (81), peut être placé à l'extrémité, de petit diamètre, dudit mandrin tronconique (401) comprenant un moyen de fixation (402) de l'insert (8), de manière à assembler ledit insert (8) à ladite portion de tube (23), éventuellement à l'aide d'une couche adhésive ou thermoscellante ou encore par soudure directe, ledit insert et ladite jupe comprenant un une même matière thermoplastique.
Cet insert peut comprendre un filetage (810) et des moyens d'étanchéité (811), typiquement un joint d'étanchéité, de manière à former une capsule de bouchage.

On peut imprimer ladite portion de tube (23) ou ladite jupe (11), éventuellement recourbée, soit avant d'avoir assemblé ladite tête, soit éventuellement après avoir assemblé ladite tête et ainsi avoir formé ladite capsule (1).
Pour cela, on peut utiliser des encres réticulables sous rayonnement, typiquement des encres UV, de manière à ce qu'on imprime ladite portion de tube ou ledit tronc de cône à extrémité éventuellement recourbée, à une température inférieure à la température à laquelle la capsule se thermorétracte.

Selon le procédé de l'invention, on peut aussi, après l'étape d), former sur ladite portion de tube (23) ou sur ladite jupe (11,12) deux lignes d'affaiblissement qui délimitent une bandelette de première ouverture dont l'extrémité forme une languette de préhension manuelle.

Le procédé selon l'invention permet d'obtenir :
- d'une part, des capsules de surbouchage, de hauteur comprise entre 20 et 60 mm et présentant une épaisseur de jupe comprise entre 0,05 mm et 0,5 mm,
- d'autre part, des capsules de bouchage munies d'un insert, de hauteur comprise entre 20 et 60 mm, et présentant une épaisseur de jupe comprise entre 0,05 mm et 0,5 mm pour la partie inférieure de la jupe non assemblée au dit insert,
- enfin, des coiffes pour vins effervescents ou boissons carbonatées sous pression, de hauteur comprise entre 60 et 200 mm, et présentant une épaisseur de jupe comprise entre 0,1 mm et 1,0 mm.
Ces capsules ou coiffes sont généralement tronconiques, et typiquement imprimées sur leur surface extérieure, et sont donc conditionnées sous forme de bâtons constitués d'empilements de capsules ou coiffes.

### EXEMPLES DE REALISATION

Les procédés décrits sur les figures 1 à 3, et 4a à 4f, sont des exemples de réalisation selon l'invention.

Dans tous les cas, on a extrudé un tube en PE pour former la jupe de la capsule ou de la coiffe, selon le procédé et le dispositif représenté sur la figure 1.
Ce dispositif comprend successivement : une extrudeuse (30), un anneau de calibrage (31), un dispositif annulaire d'irradiation β (32), un dispositif de réchauffage (33), un dispositif d'expansion (34), un dispositif de refroidissement à circulation d'air ou d'eau 35), et un dispositif de tronçonnage (36).
Tous ces équipements sont des équipements standards, à l'exception du dispositif annulaire d'irradiation (32) qui a été fabriqué pour la mise en oeuvre de l'invention et la réalisation des essais.

En vue de former des capsules de surbouchage tronconiques de 50 mm de hauteur ou longueur, et de diamètre égal à 29,5 mm pour la tête et 30,5 mm pour l'ouverture à l'extrémité opposée, on a formé un tube extrudé (20) de 20 mm de diamètre D₁ à la vitesse de 30 m/min.
On a ensuite réticulé ce tube sous rayonnement β d'une puissance installée de 150 KeV.

On a ensuite expansé le tube réticulé (21) jusqu'à un diamètre D₂ de 30 mm, grâce à un dispositif d'expansion (33) comprenant des anneaux de calibrage (340) qui délimitent une cavité intérieure sous vide relatif (341), de manière à obtenir un tube expansé (22), qui a été ensuite tronçonné en portions de tube (23) de 53 mm de longueur.

En ce qui concerne la tête (10) de la capsule (1), l'invention a été ensuite mise en oeuvre selon les quatre modalités décrites sur les figures 1 à 4f.
Toutes ces modalités ont été mises en oeuvre à l'aide d'un carrousel (40), typiquement à 6 postes, et muni de supports ou mandrins tronconiques (400).
Au poste I , on place la portion de tube (23) sur un mandrin (400).
Au poste II, on effectue un rétreint de la portion de tube pour la rendre tronconique, pour recourber l'extrémité, et former ainsi la jupe (11), par apport thermique Q, typiquement en envoyant de l'air chaud sur la portion de tube (23).
Sur au moins un des postes suivants, on assemble ou on forme la tête sur la jupe selon les variantes indiquées ci-après.
Au poste VI, on éjecte la capsule (1) formée selon l'invention.

Première variante : comme représenté sur la figure 1, on a utilisé pour former la tête (100) une bande (50) d'aluminium revêtue d'une couche thermoadhésive dans laquelle on a découpé des pastilles (51) pour les assembler à la jupe (11) de manière connue selon l'état de la technique.
On a fait des essais également avec une bande de PE transparent.

Seconde variante : comme représenté sur la figure 2, on a injecté, à l'aide d'une extrudeuse (61) alimenté en PE (60), la tête (101) sur la jupe (11) portée par le mandrin (400).

Troisième variante : comme représenté sur la figure 3, on a moulé la tête (102) à l'aide d'un moule (73) dans lequel on a introduit la quantité de matériau (70), du PE, éventuellement à l'état fondu, nécessaire pour former la tête, en fermant le moule (73) sur la jupe (11) portée par le mandrin (400). Selon la matière de la tête, le moule (73) peut être alimenté à partir d'une extrudeuse (72), à partir d'un réservoir (71) de matériau (70) à l'état fondu, ou encore à partir d'une trémie contenant des granulés. Selon le cas, le moule peut être chauffé de manière à fondre le matériau (70) constituant la tête (102).

Quatrième variante : comme représenté sur les figures 4a à 4f, on a adapté les mandrins du carrousel (40) pour avoir des mandrins (401) avec tête filetée (402) apte à fixer des inserts (8) à filetage (810), comme illustré sur les figures 4a à 4c. Après avoir placé la portion de tube (23) - voir figure 4d, on le réchauffe par apport thermique Q de manière à ce que la portion de tube (23) se thermorétracte, et s'assemble notamment à l'insert (8).
Pour faciliter l'expulsion de la capsule une fois formée, on a aussi utilisé un mandrin expansible.

On a aussi fabriqué des coiffes pour vins de Champagne par les mêmes procédés. Ces coiffes avaient 120 mm de hauteur et des diamètres de 33 mm pour la tête et de 50 mm pour l'ouverture à l'extrémité opposée.

### AVANTAGES DE L'INVENTION

L'invention présente de grands avantages dans la mesure où elle permet d'obtenir des capsules ou coiffes de grande qualité esthétique, qu'il s'agisse des capsules ou coiffes en elles-mêmes ou qu'il s'agisse surtout des coiffes ou capsules une fois thermorétractées sur les goulots de bouteilles.
Le procédé selon l'invention permet en outre d'obtenir des capsules ou coiffes composites en divers matériaux dans la mesure où l'on peut choisir pour la tête et pour la jupe de la capsule des matériaux différents, ce qui, en introduisant de nombreuses possibilités de différentiation, est d'un grand intérêt commercial.
Enfin, le procédé selon l'invention est particulièrement économique, à la fois parce qu'il peut utiliser les matières les moins chères qui soient, le PE en particulier, parce qu'il autorise des cadences élevées, et aussi parce que la plupart des équipements nécessaires pour la mise en oeuvre du procédé sont des équipement usuels peu onéreux.

### LISTE DES REPERES

| | |
|---|---|
| Capsule ou coiffe | |
| Tête | 0 |
| Tête assemblée | 100 |
| Tête injectée | 101 |
| Tête moulée | 102 |
| Tête formée d'un insert | 103 |
| Jupe | 11 |
| Jupe assemblée à un insert | 12 |
| Jupe roulée selon l'état de la technique | 13 |
| Matière plastique de la jupe | 2 |
| Tube extrudé | 20 |
| Tube réticulé | 21 |
| Tube expansé | 22 |
| Portions de tube | 23 |
| Ligne de fabrication de portions de tubes 23 | 3 |
| Extrudeuse | 30 |
| Calibreuse | 31 |
| Dispositif annulaire d'irradiation β | 32 |
| Dispositif de chauffage | 33 |
| Dispositif d'expansion | 34 |
| Anneaux de calibrage | 340 |
| Cavité intérieure sous vide relatif | 341 |
| Dispositif de refroidissement | 35 |
| Dispositif de tronçonnage | 36 |
| Ligne de formation de la capsule | 4 |
| Carrousel | 40 |
| Mandrins - supports | 400 |
| Mandrin pour insert | 401 |
| Tête | 402 |
| Poste I de chargement | 41 |
| Poste II de conification/courbure de l'extrémité | 42 |
| Postes VI d'éjection de la capsule 1 | 43 |
| Ligne de formation du premier type de tête | 5 |
| Bande de matériau pour la tête | 50 |
| Pastille découpée dans la bande 50 | 51 |
| Matrice de thermoscellage | 52 |
| Poste III de formation de la pastille de tête | 53 |
| Poste IV de thermoscellage de la pastille de tête | 54 |
| Ligne de formation du second type de tête | 6 |
| Matière plastique de tête | 60 |
| Extrudeuse du matériau de tête | 61 |
| Matrice d'injection de la tête | 62 |
| Poste III d'extrusion de la tête | 63 |
| Ligne de formation du troisième type de tête | 7 |
| Matière plastique de tête | 70 |
| Réservoir de matière fondue | 71 |
| Extrudeuse | 72 |
| Moule | 73 |
| « Grain » de matière de tête | 74 |
| Poste IV de moulage de la tête | 75 |
| Insert pour le quatrième type de tête | 8 |
| Tête de l'insert | 80 |
| Jupe de l'insert | 81 |
| Filetage intérieur de la jupe | 810 |
| Joint d'étanchéité | 811 |
| Ligne selon l'état de la technique | 9 |
| Bande de matériau de jupe | 90 |
| Flan ou portion de bande découpée | 91 |
| Filet latéral d'adhésif | 92 |
| Adhésif | 93 |

## Revendications

1. Procédé de fabrication de capsules ou coiffes à jupe thermorétractable (1) dans lequel :
a) on forme par extrusion un tube extrudé (20) en matière thermoplastique, typiquement choisie parmi des polyoléfines, présentant, en sortie d'extrudeuse, un diamètre D₁,
b) puis, ledit tube extrudé de diamètre D1 est soumis à un traitement d'irradiation, typiquement appliqué audit tube extrudé à l'aide d'un dispositif d'irradiation annulaire (32) entourant ledit tube extrudé (20), de manière à réticuler ladite matière thermoplastique et former un tube réticulé (21),
c) ledit tube réticulé (21), après avoir été porté à une température au moins égale à une température sensiblement égale à la température de fusion de sa phase cristalline, est soumis, au défilé, à une expansion monoaxiale radiale pour former un tube expansé (22) de diamètre D2, ladite expansion monoaxiale radiale étant obtenue en maintenant sous dépression l'extérieur dudit tube réticulé (21), puis est refroidi jusqu'à la température, typiquement la température ambiante, à laquelle il peut être tronçonné,
d) ledit tube expansé (22) est ensuite tronçonné en portions de tube (23), de longueur sensiblement égale à la hauteur desdites capsules ou coiffes (1), et
e) une tête (10,100,101,102,103) est ensuite assemblée à ou formée sur ladite portion de tube (23),
de manière à obtenir une capsule ou une coiffe (1), à jupe thermorétractable, économique et présentant une jupe (11,12) homogène exempte de ligne de raccordement axial.

2. Procédé selon la revendication 1 dans lequel ledit tube (20), en sortie d'extrudeuse et avant ledit traitement d'irradiation, est soumis à un refroidissement et à un calibrage, de manière à imposer audit tube des caractéristiques géométriques prédéterminées.

3. Procédé selon une quelconque des revendications 1 à 2 dans lequel, à l'étape c) du procédé, ladite expansion monoaxiale a lieu, en totalité ou en partie, durant la phase où le tube est refroidi.

4. Procédé selon une quelconque des revendications 1 à 3 dans lequel ladite matière plastique (2) comprend une polyoléfine choisie parmi le PE, le PP, le PB, les copolymères d'éthylène et de propylène, ou un élastomère, ou un mélange de ces différents polymères, sous forme d'un matériau monocouche ou d'un matériau multicouche.

5. Procédé selon la revendication 4 dans lequel ladite matière plastique est constitué par un matériau monocouche en polyoléfine, choisi parmi le PE ou le PP.

6. Procédé selon une quelconque des revendications 1 à 5 dans lequel ladite matière plastique (2) contient une charge micronisée typiquement choisie parmi le talc, le carbonate de calcium, le sulfate de baryum, l'oxyde de titane, les pigments organiques ou minéraux.

7. Procédé selon une quelconque des revendications 1 à 6 dans lequel ledit traitement d'irradiation est un rayonnement ionisant choisi parmi les rayonnements β ou γ.

8. Procédé selon la revendication 7 dans lequel ledit traitement d'irradiation est de préférence un bombardement électronique ou rayonnement β.

9. Procédé selon une quelconque des revendications 1 à 8 dans lequel D₁ est compris entre 10 mm et 30 mm, le rapport D₂/D₁ étant compris entre 1,5 et 4.

## Claims

1. Process for manufacturing caps or overcaps with heat shrinking skirts (1) in which:
a) an extruded tube (20) is formed by extrusion of a thermoplastic material, typically chosen from among polyolefins, with a diameter D₁, at the exit from the extruder,
b) the said extruded tube with diameter D1 is then subjected to an irradiation treatment typically applied to the said extruded tube using an annular irradiation device (32) surrounding the said extruded tube (20),so as to cross link the said thermoplastic material and form a cross-linked tube (21),
c) the said cross-linked tube (21) is warmed up to a temperature equal to at least approximately the melting temperature of its crystalline phase, and is then subjected to a monoaxial radial expansion, while moving, to form an expanded tube (22) with diameter D2, and is then cooled to the temperature at which it can be cut into portions, typically ambient temperature,
d) the said expanded tube (22) is then cut into tube portions (23) with a length approximately equal to the height of the said caps (1), and
e) a head (10, 100, 101, 102, 103) is then assembled or formed on the said portion of tube (23),
so as to obtain an economical cap or overcap (1) with a heat shrinking skirt (11, 12) that has a homogenous skirt with no axial connection line.

2. Process according to claim 1 in which the said tube (20) may be cooled and calibrated at the exit from the extruder and before the said irradiation processing, so as to impose predetermined geometric characteristics on the said tube.

3. Process according to any one of claims 1 to 2, in which in step c) in the process, the said monoaxial expansion takes place completely or partly during the phase in which the tube is cooled.

4. Process according to any one of claims 1 to 3 in which the said plastic material (2) comprises a polyolefin chosen from among PE, PP and PB, ethylene and propylene copolymers, or an elastomer, or a mix of these different polymers in the form of a single layer material or a multiple layer material.

5. Process according to claim 4, in which the said plastic material is composed of a single layer material made of a polyolefin chosen from among PE or PP.

6. Process according to any one of claims 1 to 5, in which the said plastic material (2) contains a micronized charge typically chosen from among talc, calcium carbonate, barium sulphate, titanium oxide, organic or mineral pigments.

7. Process according to any one of claims 1 to 6 in which the said irradiation treatment is an ionising radiation chosen from among β and γ radiation.

8. Process according to claim 7, in which the said irradiation treatment is preferably an electronic bombardment or β radiation.

9. Process according to any one of claims 1 to 8, in which D₁ is between 10 mm and 30 mm, the ratio D₂/D₁ is between 1.5 and 4.

## Patentansprüche

1. Verfahren zur Herstellung von Kappen oder Hauben (1) mit wärmeschrumpfbarer Schürze, bei dem:
a) durch Extrudieren ein extrudiertes Rohr (20) aus thermoplastischem, typischerweise unter Polyolefinen gewähltem Material geformt wird, das beim Austritt aus dem Extruder einen Durchmesser D₁ aufweist,
b) das extrudierte Rohr mit dem Durchmesser D1 anschließend einer Strahlungsbehandlung unterworfen wird, die auf das extrudierte Rohr typischerweise mit Hilfe einer ringförmigen Strahlungsvorrichtung (32), welche das extrudierte Rohr (20) umgibt, angewendet wird, um das thermoplastische Material zu vernetzen und ein vernetztes Rohr (21) zu bilden,
c) das vernetzte Rohr (21), nachdem es auf eine Temperatur erwärmt wurde, welche mindestens einer Temperatur entspricht, die im Wesentlichen gleich der Schmelztemperatur seiner kristallinen Phase ist, kontinuierlich einer radialen, monoaxialen Aufweitung unterworfen wird, um ein aufgeweitetes Rohr (22) mit dem Durchmesser D2 zu gewinnen, wobei die radiale, monoaxiale Aufweitung dadurch erhalten wird, dass die Außenseite des vernetzten Rohrs (21) unter Unterduck gehalten wird, und es dann auf die Temperatur heruntergekühlt wird, typischerweise die Raumtemperatur, bei der es in Stücke geteilt werden kann,
d) das aufgeweitete Rohr (22) dann in Rohrstücke (23) geteilt wird, deren Länge im Wesentlichen der Höhe der Kappen oder Hauben (1) entspricht, und
e) anschließend ein Kopf (10, 100, 101, 102, 103) an das Rohrstück (23) angefügt oder angeformt wird,
um eine Kappe oder eine Haube (1) mit wärmeschrumpfbarer Schürze zu erhalten, die kostengünstig ist und eine homogen gestaltete Schürze (11, 12) ohne axiale Verbindungslinie aufweist.

2. Verfahren nach Anspruch 1, bei dem das Rohr (20) beim Austritt aus dem Extruder und vor der Strahlungsbehandlung einer Abkühlung und Kalibrierung unterzogen wird, um ihm vorbestimmte geometrische Eigenschaften zu verleihen.

3. Verfahren nach irgendeinem der Ansprüche 1 bis 2, bei dem die monoaxiale Aufweitung im Verfahrensschritt c) ganz oder teilweise während der Phase erfolgt, in der das Rohr abgekühlt wird.

4. Verfahren nach irgendeinem der Ansprüche 1 bis 3, bei dem der Kunststoff (2) ein unter PE, PP, PB, Ethylen- und Propylen-Copolymeren gewähltes Polyolefin oder ein Elastomer oder ein Gemisch aus diesen verschiedenen Polymeren in Form eines Einschicht- oder Mehrschichtwerkstoffs aufweist.

5. Verfahren nach Anspruch 4, bei dem der Kunststoff aus einem Einschichtwerkstoff aus Polyolefin besteht, welches unter PE und PP gewählt wird.

6. Verfahren nach irgendeinem der Ansprüche 1 bis 5, bei dem der Kunststoff (2) einen mikronisierten Füllstoff enthält, der typischerweise unter Talk, Kalziumcarbonat, Bariumsulfat, Titanoxid, organischen oder mineralischen Pigmenten gewählt wird.

7. Verfahren nach irgendeinem der Ansprüche 1 bis 6, bei dem es sich bei der Strahlungsbehandlung um eine unter den β- oder γ-Strahlungen gewählte ionisierende Strahlung handelt.

8. Verfahren nach Anspruch 7, bei dem es sich bei der Strahlungsbehandlung vorzugsweise um einen Elektronenbeschuss oder eine β-Strahlung handelt.

9. Verfahren nach irgendeinem der Ansprüche 1 bis 8, bei dem D₁ zwischen 10 mm und 30 mm liegt, wobei das D₂/D₁-Verhältnis 1,5 bis 4 beträgt.
